(19) Europäisches Patentamt
European Patent Office
Office européen des brevets

(11) EP 1 638 401 B1

(12) # EUROPÄISCHE PATENTSCHRIFT

(45) Veröffentlichungstag und Bekanntmachung des Hinweises auf die Patenterteilung:
**20.12.2006 Patentblatt 2006/51**

(21) Anmeldenummer: **04739692.4**

(22) Anmeldetag: **08.06.2004**

(51) Int Cl.:
***A01N 43/90*** (2006.01) ***A01N 43/54*** (2006.01)

(86) Internationale Anmeldenummer:
**PCT/EP2004/006163**

(87) Internationale Veröffentlichungsnummer:
**WO 2004/110150 (23.12.2004 Gazette 2004/52)**

(54) **FUNGIZIDE MISCHUNGEN AUF DER BASIS EINES TRIAZOLOPYRIMIDIN-DERIVATES**
FUNGICIDAL MIXTURES BASED ON A TRIAZOLOPYRIMIDINE DERIVATIVE
MELANGES FONGICIDES A BASE D'UN DERIVE DE TRIAZOLOPYRIMIDINE

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**HR LT LV**

(30) Priorität: **18.06.2003 DE 10327866**
**16.07.2003 DE 10332461**
**13.01.2004 DE 102004001991**

(43) Veröffentlichungstag der Anmeldung:
**29.03.2006 Patentblatt 2006/13**

(73) Patentinhaber: **BASF Aktiengesellschaft**
**67056 Ludwigshafen (DE)**

(72) Erfinder:
- **TORMO I BLASCO, Jordi**
  **69514 Laudenbach (DE)**
- **GROTE, Thomas**
  **67157 Wachenheim (DE)**
- **SCHERER, Maria**
  **76829 Godramstein (DE)**
- **STIERL, Reinhard**
  **67251 Freinsheim (DE)**
- **STRATHMANN, Siegfried**
  **67117 Limburgerhof (DE)**
- **SCHÖFL, Ulrich**
  **68782 Brühl (DE)**

(56) Entgegenhaltungen:
**EP-A- 0 071 792**
**EP-A- 0 253 714**
**EP-A- 0 988 790**
**WO-A-98/46607**
**FR-A- 2 744 333**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 638 401 B1

Printed by Jouve, 75001 PARIS (FR)

## Beschreibung

Die vorliegende Erfindung betrifft fungizide Mischungen, enthaltend als aktive Komponenten

1) das Triazolopyrinnidinderivat der Formel I,

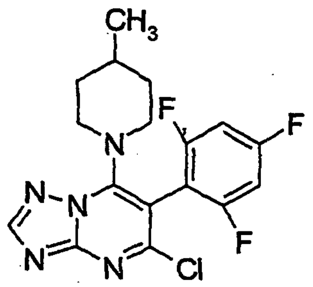

I

und

2) ein Pyrimidinanilid der Formel II,

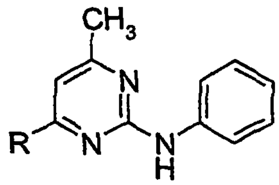

II

in der R für Methyl, Cyclopropyl oder 1-Propinyl steht,
in einer synergistisch wirksamen Menge.

Außerdem betrifft die Erfindung ein Verfahren zur Bekämpfung von Schadpilzen aus der Klasse der *Oomyceten* mit Mischungen der Verbindung I mit einer der Verbindungen II und die Verwendung der Verbindung I mit einer der Verbindungen II zur Herstellung derartiger Mischungen sowie Mittel, die diese Mischungen enthalten.

Die Verbindung I, 5-Chlor-7-(4-methyl-piperidin-1-yl)-6-(2,4,6-trifluor-phenyl)-[1,2,4]triazolo[1,5-a]pyrimidin, ihre Herstellung und deren Wirkung gegen Schadpilze ist aus der Literatur bekannt (WO 98/46607).

Mischungen von Triazolopyrimidinderivaten mit Pyrimethanil, bzw. Cyprodinil sind allgemein aus EP-A 988 790 bekannt. Die Verbindung I ist von der allgemeinen Offenbarung dieser Schrift umfasst, ist jedoch nicht explizit erwähnt. Die Kombination der Verbindung I mit den Verbindungen II ist daher neu.

Die Verbindungen II, ihre Herstellung und deren Wirkung gegen Schadpilze ist ebenfalls aus der Literatur bekannt.

| Verbindung Nr. | R | common name | Literatur |
|---|---|---|---|
| II-1 | Methyl | pyrimethanil | DD-A 151 404 |
| II-2 | Cyclopropyl | cyprodinil | EP-A 310 550 |
| II-3 | 1-Propinyl | mepanipyrim | EP-A 224 339 |

FR-A 2 744 333 A beschreibt synergistische Mischungen von Strobilurinen mit> Pyrimethanil, Cyprodinil und Mepanipyram.

Die in EP-A 988 790 beschriebenen synergistischen Mischungen von Triazotopyrimidinen werden als fungizid wirksam gegen verschiedene Krankheiten von Getreide, Obst und Gemüse, insbesondere Mehltau an Weizen und Gerste oder Grauschimmel an Äpfeln beschrieben. Die fungizide Wirkung dieser Mischungen gegen Schadpilze aus der Klasse der *Oomyceten* lässt jedoch zu wünschen übrig.

Das biologische Verhalten von *Oomyceten* weicht deutlich von dem der *Ascomyceten, Deuteromyceten,* und

*Basidiomyceten* ab, denn *Oomyceten* sind biologisch eher mit Algen als mit Pilzen verwandt. Daher sind Erkenntnisse zur fungiziden Aktivität von Wirkstoffen gegen "echte Pilze", wie *Ascomyceten, Deuteromyceten,* und *Basidiomyceten* nur sehr eingeschränkt auf *Oomyceten* übertragbar.

*Oomyceten* verursachen wirtschaftlich bedeutsame Schäden an verschiedenen Kulturpflanzen. In vielen Regionen stellen Infektionen durch *Phytophthora infestans* im Kartoffel- und Tomatenanbau die bedeutendsten Pflanzenkrankheiten dar. Im Weinbau werden erhebliche Schäden durch Rebenperonospora verursacht.

EP-A 71 792 offenbart Triazolo- und Imidazolopyrimidine, die den in WO98/46607 und EP-A 988790 beschriebenen Azolopyrimidinen strukturell ähnlich sind, und beschreibt sie als wirksam insbesondere gegen Phycomyceten (Algenpilze) wie z.B. *Plasmopara viticola* (falscher Mehltau, *Peronosporales, Oomycetes*).

EP-A 253 714 beschreibt synergistische Mischungen zur Bekämpfung von Oomyceten, die ein fungizides Phenylamid, wie z.B. Metalaxyl oder Benalaxyl und einen die Ergosterolsynthese hemmenden Wirkstoff, wie z.B. Triadimefon enthalten.

Es besteht ein andauernder Bedarf an neuen *Oomyceten*-Mitteln in der Landwirtschaft, da die Schadpilze gegen die im Markt etablierten Produkte, wie z.B. Metalaxyl und strukturell ähnliche Wirkstoffe, bereits verbreitet Resistenzen entwickelt haben.

Praktische Erfahrungen in der Landwirtschaft haben gezeigt, dass der wiederholte und ausschließliche Einsatz eines Einzelwirkstoffs bei der Bekämpfung von Schadpilzen in vielen Fällen zur schnellen Selektion von solchen Pilzstämmen führt, die gegen den betreffenden Wirkstoff eine natürliche oder adaptierte Resistenz entwickelt haben. Eine wirksame Bekämpfung dieser Pilze mit dem betreffenden Wirkstoff ist dann nicht mehr möglich.

Um die Gefahr der Selektion von resistenten Pilzstämmen zu verringern, werden heutzutage zur Bekämpfung von Schadpilzen bevorzugt Mischungen verschiedener Wirkstoffe eingesetzt. Durch Kombination von Wirkstoffen mit unterschiedlichen Wirkungsmechanismen kann der Bekämpfungserfolg über längere Zeit gesichert werden.

Im Hinblick auf effektives Resistenzmanagement und eine wirkungsvolle Bekämpfung von Schadpilzen aus der Klasse der *Oomyceten* bei möglichst geringen Aufwandmengen lagen der vorliegenden Erfindung Mischungen als Aufgabe zugrunde, die bei möglichst geringer Gesamtmenge an ausgebrachten Wirkstoffen eine ausreichende Wirkung gegen die Schadpilze zeigen.

Demgemäss wurden die eingangs definierten Mischungen gefunden. Es wurde außerdem gefunden, dass sich bei gleichzeitiger gemeinsamer oder getrennter Anwendung der Verbindung I und einer der Verbindungen II oder bei Anwendung der Verbindungen I und einer der Verbindungen II nacheinander *Oomyceten* besser bekämpfen lassen als mit den Einzelverbindungen (synergistische Mischungen).

Ein bevorzugter Gegenstand der vorliegenden Erfindung sind Mischungen der Verbindung I mit der Verbindung II-1, 4,6-Dimethyl-pyrimidin-2-yl)-phenyl-amin; common name pyrimethanil).

Ein weiterer bevorzugter Gegenstand der vorliegenden Erfindung sind Mischungen der Verbindung I mit der Verbindung II-2, (4-Cyclopropyl-6-methyl-pyrimidin-2-yl)-phenyl-amin; common name: cyprodinil).

Ein weiterer bevorzugter Gegenstand der vorliegenden Erfindung sind Mischungen der Verbindung I mit der Verbindung II-3, (4-Methyl-6-prop-1-inyl-pyrimidin-2-yl)-phenyl-amin; common name: mepanipyrim).

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Als weitere Wirkstoffe im voranstehenden Sinne kommen insbesondere Wirkstoffe ausgewählt aus den folgenden Gruppen in Frage:

- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Spiroxamin, Tridemorph
- Anilinopyrimidine wie Pyrimethanil, Mepanipyrim oder Cyprodinil,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazole, Dinitroconazol, Epoxiconazol, Fenbuconazol, Fluquiconazol, Flusilazol, Flutriafol, Hexaconazol, Imazalil, Ipconazol, Metconazol, Myclobutanil, Penconazol, Propiconazol, Prochloraz, Prothioconazol, Simeconazol, Tebuconazol, Tetraconazol, Triadimefon, Triadimenol, Triflumizol, Triticonazol,
- Dicarboximide wie Iprodion, Myclozolin, Procymidon, Vinclozolin,
- pithiocarbamate wie Ferbam, Nabam, Mäneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, lsoprothiolan, Mepronil, Nuarimol, Picobenzamid, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine,

- Kupferfungizide wie Bordeaux Brühe, Kupferoxychlorid, Kupferhydroxid, Kupferoxid, (basisches) Kupfersulfat, Kupferoxychlorid-sulfat,
- Nitrophenylderivate, wie Binapacryl, Dinocap, Dinobuton, Nitrophthal-isopropyl
- Phenylpyrrole wie Fenpiclonil oder Fludioxonil,
- Schwefel,
- Sonstige Fungizide wie Acibenzolar-S-methyl, Benthiavalicarb, Carpropamid, Chlorothalonil, Cyflufenamid, Cymoxanil, Dazomet, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid,
- Strobilurine wie Fluoxastrobin, Kresoxim-methyl, Metominostrobin, Orysastrobin, Picoxystrobin, Pyraclostrobin oder Trifloxystrobin,
- Sulfensäurederivate wie Captafol, Captan, Dichlofluanid, Folpet, Tolylfluanid
- Zimtsäureamide und Analoge wie Dimethomorph, Flumetover oder Flumorph.

In einer Ausführungsform der erfindungsgemäßen Mischungen werden den Verbindungen I und II ein weiteres Fungizid III oder zwei Fungizide III und IV beigemischt.

Als Komponenten III und IV kommen insbesondere die genannten heterocyclischen Verbindungen oder und/ oder Dicarboximide in Frage.

Mischungen der Verbindungen I und II mit einer Komponente III sind bevorzugt. Besonders bevorzugt sind Mischungen der Verbindungen I und II.

Die Mischungen der Verbindung I und einer der Verbindungen II bzw. die gleichzeitige gemeinsame oder getrennte Verwendung der Verbindung I und einer der Verbindungen II zeichnen sich aus durch eine hervorragende Wirksamkeit gegen pflanzehpathogene Pilze aus der Klasse der *Oomyceten,* insbesondere von *Phytophthora infestans* an Kartoffeln und Tomaten, sowie *Plasmopara viticola* an Reben. Sie sind zum Teil systemisch wirksam und können im Pflanzenschutz als Blatt- und Bodenfungizide eingesetzt werden.

Besondere Bedeutung haben sie für die Bekämpfung von *Oomyceten* an verschiedenen Kulturpflanzen wie Gemüsepflanzen (z.B. Gurken, Bohnen und Kürbisgewächse), Kartoffeln, Tomaten, Reben und entsprechende Samen.

Insbesondere eignen sie sich zur Bekämpfung der Kraut- und Knollenfäule an Tomaten und Kartoffeln, die durch *Phytophthora infestans* verursacht wird, sowie des falschen Rebenmehltaus (Rebenperonospora), verursacht durch *Plasmopara viticola.*

Darüber hinaus ist die erfindungsgemäße Kombination der Verbindungen I und II auch zur Bekämpfung anderer Pathogene geeignet, wie z. B. *Septoria*- und *Puccinia*-Arten in Getreide und *Alternaria*- und *Boytritis*-Arten in Gemüse, Obst und Wein.

Die Verbindung I und die Verbindungen II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindung I und die Verbindungen II werden üblicherweise in einem Gewichtsverhältnis von 100:1 bis 1: 100, vorzugsweise 10:1 bis 1:50, insbesondere 5:1 bis 1:20 angewandt.

Die Komponenten III und IV werden ggf. im Verhältnis von 20:1 bis 1:20 zu der Verbindung I zugemischt.

Die Aufwandmengen der erfindungsgemäßen Mischungen liegen je nach Art der Verbindung und des gewünschten Effekts bei 5 g/ha bis 2000 g/ha, vorzugsweise 50 bis 1500 g/ha, insbesondere 50 bis 750 g/ha.

Die Aufwandmengen für die Verbindung I liegen entsprechend in der Regel bei 1 bis 1000 g/ha, vorzugsweise 10 bis 750 g/ha, insbesondere 20 bis 500 g/ha.

Die Aufwandmengen für die Verbindung II-1 liegen entsprechend in der Regel bei 1 bis 1000 g/ha, vorzugsweise 10 bis 750 g/ha, insbesondere 20 bis 500 g/ha.

Die Aufwandmengen für die Verbindung II-2 liegen entsprechend in der Regel bei 1 bis 1000 g/ha, vorzugsweise 10 bis 750 g/ha, insbesondere 20 bis 500 g/ha.

Die Aufwandmengen für die Verbindung II-3 liegen entsprechend in der Regel bei 1 bis 1000 g/ha, vorzugsweise 10 bis 750 g/ha, insbesondere 20 bis 500 g/ha.

Bei der Saatgutbehandlung werden im allgemeinen Aufwandmengen an Mischung von 1 bis 1000 g/100 kg Saatgut, vorzugsweise 1 bis 200 g/100 kg, insbesondere 5 bis 100 g/100 kg verwendet.

Das Verfahren zur Bekämpfung von Schadpilzen erfolgt durch die getrennte oder gemeinsame Applikation der Verbindung I und der Verbindung II oder der Mischungen aus der Verbindung I und der Verbindung II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mischungen, bzw. die Verbindungen I und II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung

der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanztichewoder-tierischen Ursprungs, aliphatische, cyclische und aromatische Kohlenwasserstoffe, z.B. Toluol, Xylol, Paraffin, Tetrahydronaphthalin, alkyklierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C), Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Verbindung und der Mischungen lässt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel - Wirksamkeit gegen Rebenperonospora verursacht durch *Plasmopara viticola*

Blätter von Topfreben der Sorte "Riesling" wurden mit wässriger Suspension in der unten angegebenen Wirkstoffkonzentration bis zur Tropfnässe besprüht. Am folgenden Tag wurden die Unterseiten der Blätter mit einer wässrigen Zoosporenaufschwemmung von *Plasmopara viticola* inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Die visuell ermittelten Werte für den Prozentanteil befallener Blattflächen wurden in Wirkungsgrade als % der unbehandelten Kontrolle umgerechnet

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.
Colby Formel:

$$E = x + y - x \cdot y/100$$

- E zu erwartender Wirkungsgrad, ausgedrückt in % der unbehandelten Kontrolle, beim Einsatz der Mischung aus den Wirkstoffen A und B in den konzentrationen a und b
- x der Wirkungsgrad, ausgedrückt in % der unbehandelten Kontrolle, beim Einsatz des Wirkstoffs A in der Konzentration a
- y der Wirkungsgrad, ausgedrückt in % der unbehandelten Kontrolle, beim Einsatz des Wirkstoffs B in der Konzentration b

Als Vergleichsverbindungen wurden die von den in EP-A 988 790 beschriebenen Mischungen bekannten Verbindungen A und B verwendet:

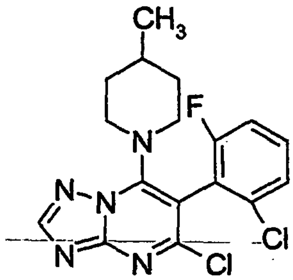 A

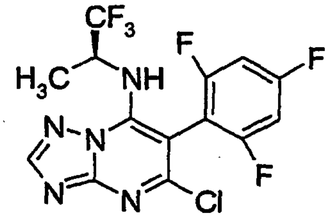 B

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | - | Kontrolle (unbehandelt) | (90 % Befall) |
| 2 | 1 | 4 | 56 |
| 3 | II-1 (Pyrimethanil) | 63<br>4<br>1 | 0<br>0<br>0 |
| 4 | II-2(Cyprodinil) | 63<br>4<br>1 | 0<br>0<br>0 |
| 5 | II-3 (Mepanipyrim) | 63<br>4<br>1 | 0<br>0<br>0 |
| 6 | Vergleich A | 4 | 0 |
| 7 | *Vergleich* B | 4 | 11 |

Tabelle B - erfindungsgemäße Mischungen

| Beispiel | Wirkstoffmischung Konzentration Mtschungsverhattnts | beobachteter Wirkungsgrad | berechneter Wirkungsgrad*) |
|---|---|---|---|
| 8 | I+II-1<br>4+63 ppm<br>1:16 | 83 | 56 |
| 9 | I+II-1<br>4+4 ppm<br>1:1 | 78 | 56 |
| 10 | I+II-1<br>4+1 ppm<br>4:1 | 78 | 56 |
| 11 | I+II-2<br>4+63 ppm<br>1:16 | 83 | 56 |
| 12 | I+II-2<br>4+4 ppm<br>1:1 | 78 | 56 |

(fortgesetzt)

| Beispiel | Wirkstoffmischung Konzentration Mtschungsverhattnts | beobachteter Wirkungsgrad | berechneter Wirkungsgrad*) |
|---|---|---|---|
| 13 | I+II-2<br>4+1 ppm<br>4:1 | 67 | 56 |
| 6 | I+II-3<br>4+63 ppm<br>1:16 | 83 | 56 |
| 7 | I+II-3<br>4+4 ppm<br>1:1 | 78 | 56 |
| 8 | I+II-3<br>4+1 ppm<br>4:1 | 78 | 56 |
| *) berechneter Wirkungsgrad nach der Colby-Formel | | | |

Tabelle C - Vergleichsversuche

| Mischungen der aus EP-A 988 790 bekannten Vergleichsverbindungen | | | |
|---|---|---|---|
| Beispiel | Wirkstoffmischung Konzentration Mischungsverhältnis | beobachteter Wirkungsgrad | berechneter Wirkungsgrad*) |
| 9 | A+II-1<br>4+63 ppm<br>1:16 | 11 | 0 |
| 10 | A+II-1<br>4+4 ppm<br>1:1 | 22 | 0 |
| 11 | A+II-1<br>4+1 ppm<br>4:1 | 0 | 0 |
| 12 | B+II-1<br>4+63 ppm<br>1:16 | 44 | 11 |
| 13 | B+II-1<br>4+4 ppm<br>1:1 | 22 | 11 |
| 14 | B+II-1<br>4+1 ppm<br>4:1 | 22 | 11 |
| 15 | A+II-2<br>4+63 ppm<br>1:16 | 0 | 0 |
| 16 | A+II-2<br>4+4 ppm<br>1:1 | 0 | 0 |
| | A+II-2 | | |

(fortgesetzt)

| Mischungen der aus EP-A 988 790 bekannten Vergleichsverbindungen | | | |
|---|---|---|---|
| Beispiel | Wirkstoffmischung Konzentration Mischungsverhältnis | beobachteter Wirkungsgrad | berechneter Wirkungsgrad*) |
| 17 | 4+1 ppm<br>4:1 | 0 | 0 |
| 18 | B+II-2<br>4+63 ppm<br>1:16 | 11 | 11 |
| 19 | B+II-2<br>4+4 ppm<br>1:1 | 11 | 11 |
| 20 | B+II-2<br>4+1 ppm<br>4:1 | 0 | 11 |
| 21 | A+II-3<br>4+63 ppm<br>1:16 | 0 | 0 |
| 22 | A+II-3<br>4+4 ppm<br>1:1 | 11 | 0 |
| 23 | A+II-3<br>4+1 ppm<br>4:1 | 11 | 0 |
| 24 | B+II-3<br>4+63 ppm<br>1:16 | 22 | 11 |
| 25 | B+II-3<br>4+4 ppm<br>1:1 | 22 | 11 |
| 26 | B+II-3<br>4+1 ppm<br>4:1 | 22 | 11 |
| *) berechneter Wirkungsgrad nach der Colby-Formel | | | |

Aus den Ergebnissen der Versuche geht hervor, dass der beobachtete Wirkungsgrad der erfindungsgemäßen Mischungen in allen Mischungsverhältnissen deutlich höher ist, als nach der Colby-Formel vorausberechnet, während die Mischungen der aus EP-A 988 790 bekannten Vergleichswirkstoffe gegen *Oomyceten* nur mäßig aktiv sind.

## Patentansprüche

**1.** Fungizide Mischungen, enthaltend als aktive Komponenten

1) das Triazolopyrimidinderivat der Formel I,

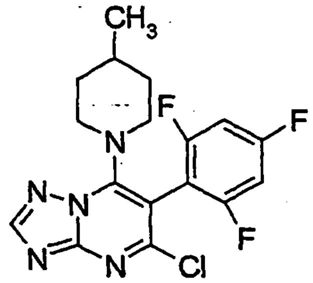

I

und

2) ein Pyrimidinanilid der Formel II,

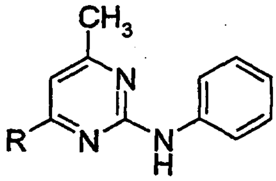

II

in der R für Methyl, Cyclopropyl oder 1-Propinyl steht,
in einer synergistisch wirksamen Menge.

2. Fungizide Mischungen, enthaltend die Verbindung der Formel I und eine Verbindung der Formel II in einem Gewichtsverhältnis von 100:1 bis 1:100.

3. Fungizide Mischungen gemäß Anspruch 1 oder 2, enthaltend als Pyrimidinanilid die Verbindung II-1: 4,6-Dimethylpyrimidin-2-yl)-phenyl-amin.

4. Fungizide Mischungen gemäß Anspruch 1 oder 2, enthaltend als Pyrimidinanilid die Verbindung 11-2: (4-Cyclopropyl-6-methyl-pyrimidin-2-yl)-phenyl-amin.

5. Fungizide Mischungen gemäß Anspruch 1 oder 2, enthaltend als Pyrimidinanilid die Verbindung 11-3: (4-Methyl-6-prop-1-inyl-pyrimidin-2-yl)-phenyl-amin.

6. Mittel, enthaltend einen flüssigen oder festen Trägerstoff und eine Mischung gemäß einem der Ansprüche 1 bis 5.

7. Verfahren zur Bekämpfung von Schadpilzen aus der Klasse der *Oomyceten,* **dadurch gekennzeichnet, dass** man die Pilze, deren Lebensraum oder die vor Pilz- befall zu schützenden Pflanzen, den Boden oder Saatgüter mit einer wirksamen Menge der Verbindung I und der Verbindung II gemäß Anspruch 1 behandelt.

8. Verfahren nach Anspruch 7, **dadurch gekennzeichnet, dass** man die Verbindungen I und II gemäß Anspruch 1 gleichzeitig, und zwar gemeinsam oder getrennt, oder nacheinander ausbringt.

9. Verfahren nach-Anspruch 7, **dadurch gekennzeichnet, dass** man die Mischung gemäß Ansprüchen 1 oder 2 auf die vor Pilzbefall zu schützenden Pflanzen oder den Boden in einer Menge von 5 g/ha bis 2000 g/ha aufwendet.

10. Verfahren nach Ansprüchen 7 und 8, **dadurch gekennzeichnet, dass** man die Mischung gemäß Ansprüchen 1 oder 2 in einer Menge von 1 bis 1000 g/100 kg Saatgut anwendet.

11. Verfahren nach Ansprüchen 7 bis 10, **dadurch gekennzeichnet, dass** der Schadpilz *Plasmopara viticola* bekämpft wird.

12. Saatgut, enthaltend die Mischung gemäß einem der Ansprüche 1 bis 5 in einer Menge von 1 bis 1000 g/100 kg.

## Claims

1. A fungicidal mixture, comprising, as active components

    1) the triazolopyrimidine derivative of the formula I

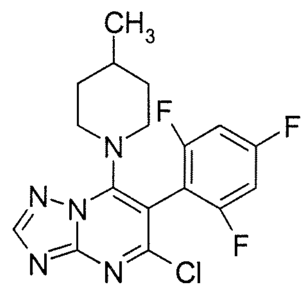

I

and
2) a pyrimidineanilide of the formula II,

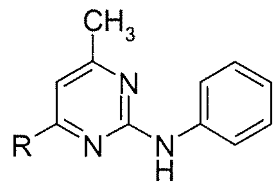

II

in which R is methyl, cyclopropyl or 1-propynyl,
in a synergistically effective amount.

2. The fungicidal mixture, comprising the compound of the formula I and the compound of the formula II in a weight ratio of from 100:1 to 1:100.

3. The fungicidal mixture according to claim 1 or 2, comprising, as pyrimidineanilide, the compound II-1: (4,6-dimethylpyrimidin-2-yl)phenylamine.

4. The fungicidal mixture according to claim 1 or 2, comprising, as pyrimidineanilide, the compound II-2: (4-cyclopropyl-6-methylpyrimidin-2-yl)phenylamine.

5. The fungicidal mixture according to claim 1 or 2, comprising, as pyrimidineanilide, the compound II-3: (4-methyl-6-prop-1-ynylpyrimidin-2-yl)phenylamine.

6. A composition, comprising a liquid or solid carrier and a mixture according to any of claims 1 to 5.

7. A method for controlling harmful fungi from the class of the *Oomycetes,* which comprises treating the fungi, their habitat or the seed, the soil or the plants to be protected against fungal attack with an effective amount of the compound I and the compound II according to claim 1.

8. The method according to claim 7 wherein the compounds I and II according to claim 1 are applied simultaneously, that is together or separately, or in succession.

9. The method according to claim 7, wherein the mixture according to claim 1 or 2 is applied to the soil or the plants to be protected against fungal attack in an amount of from 5 g/ha to 2000 g/ha.

10. The method according to claim 7 or 8, wherein the mixture according to claim 1 or 2 is applied in an amount of from

1 to 1000 g/100 kg of seed.

**11.** The method according to any of claims 7 to 10, wherein the harmful fungus *Plasmopara viticola* is controlled.

**12.** Seed, comprising the mixture according to any of claims 1 to 5 in an amount of from 1 to 1000 g/100 kg.

**Revendications**

**1.** Mélanges fongicides, contenant comme composants actifs :

1) le dérivé de triazolopyrimidine de formule I :

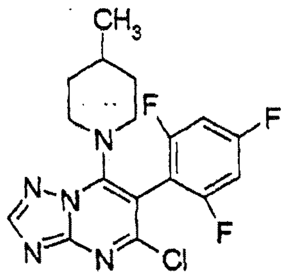

I

et
2) un pyrimidinanilide de formule II :

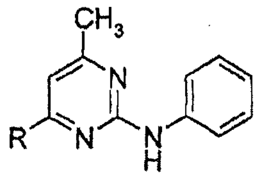

II

dans laquelle R est un groupement méthyle, cyclopropyle ou 1-propinyle, en quantité efficace au plan synergique.

**2.** Mélanges fongicides contenant le composé de formule I et un composé de formule II dans un rapport pondéral de 100:1 à 1:100.

**3.** Mélanges fongicides selon la revendication 1 ou 2, contenant comme pyrimidinanilide le composé 11-1:4,6-diméthyl-pyrimidin-2-yl)-phénylamine.

**4.** Mélanges fongicides selon la revendication 1 ou 2, contenant comme pyrimidinanilide le composé II-2:(4-cyclopropyl-6-méthyl-pyrimidin-2-yl)-phénylamine.

**5.** Mélanges fongicides selon la revendication 1 ou 2, contenant comme pyrimidinanilide le composé II-3:(4-méthyl-6-prop-1-inyl-pyrimidin-2-yl)-phénylamine.

**6.** Agent, contenant un véhicule liquide ou solide et un mélange selon l'une quelconque des revendications 1 à 5.

**7.** Procédé pour lutter contre des champignons nuisibles de la classe des oomycètes, **caractérisé en ce que** l'on traite les champignons, leur biotope ou les plantes à protéger de l'infection des champignons, le sol ou les semences avec une quantité efficace du composé I et du composé II selon la revendication 1.

**8.** Procédé selon la revendication 7, **caractérisé en ce que** l'on répand les composés I et II selon la revendication 1 simultanément, c'est-à-dire conjointement ou séparément, ou successivement.

**9.** Procédé selon la revendication 7, **caractérisé en ce que** l'on utilise le mélange selon la revendication 1 ou 2 sur les plantes à protéger de l'infection des champignons ou sur le sol en quantité de 5 g/ha à 2000 g/ha.

**10.** Procédé selon les revendications 7 et 8, **caractérisé en ce que** l'on utilise le mélange selon la revendication 1 ou 2 en quantité de 1 à 1000 g/100 kg de semences.

**11.** Procédé selon les revendications 7 à 10, **caractérisé en ce qu'**on lutte contre le champignon nuisible *Plasmopara viticola*.

**12.** Semences contenant le mélange selon l'une quelconque des revendications 1 à 5 en quantité de 1 à 1000 g/100 kg.